# EUROPEAN PATENT APPLICATION

(11) **EP 4 763 749 A1**
(43) Date of publication of application: **24.06.2026**
(21) Application number: 25782801.2
(22) Date of filing: 10.03.2025
(51) Int. Cl.: B65G 1/04, B62B 3/04

(54) **BOX RECOVERY SYSTEM**

(30) Priority: 03.04.2024 KR 20240045565
(71) Applicant: LG Energy Solution, Ltd., Seoul 07335 (KR)
(72) Inventor: JEON, Sang Chul, Daejeon 34122 (KR); LEE, Ho Jung, Daejeon 34122 (KR); BAEK, Ju Hwan, Daejeon 34122 (KR)
(74) Representative: BCKIP Part mbB
(86) International application number: PCT/KR2025/003114
(87) International publication number: WO 2025/211598

(57) **Abstract**

The present disclosure relates to a box collection system, and more specifically, to a box collection system that collects a scrap box in which scraps such as cuttings or dust of raw materials generated in the process of manufacturing or processing a product are loaded. A box collection system according to one embodiment of the present disclosure may include a rack in which a scrap box is installed; and a box collection unit that is carried into/out from the rack and collects the scrap box, wherein the rack may include a coupling member that clamps the box collection unit when the box collection unit is carried in and unclamps the box collection unit when the box collection unit is carried out.

## Description

### TECHNICAL FIELD

### CROSS-REFERENCE TO RELATED APPLICATIONS

The present application claims priority to Korean Patent Application No. 10-2024-0045565 filed on April 3, 2024 in the Republic of Korea, the disclosures of which are incorporated herein by reference.

### TECHNICAL FIELD

The present disclosure relates to a box collection system, and more specifically, to a box collection system that collects a scrap box in which scraps such as cuttings or dust of raw materials generated in the process of manufacturing or processing a product are loaded.

### BACKGROUND ART

In the process of manufacturing and processing a product, scraps such as cuttings or dust of raw materials are generated. At this time, in order to maintain a comfortable working environment and collect scraps to reprocess them into raw materials, a scrap box for loading scraps may be provided at a place where the manufacturing and processing process of the product is performed.

Conventionally, when a scrap box provided in a scrap storage device was filled with a certain amount of scraps, the scrap box was moved to a designated discharge place and then the scraps were discharged. Specifically, the operator moved a box collection unit that collects the scrap box into the scrap storage device and then loaded the scrap box onto the box collection unit. Thereafter, the box collection unit was moved to a designated scrap discharge place, and the scraps in the scrap box could be discharged by the operator.

According to this conventional system, the scrap storage device did not have a separate fixing member for fixing the box collection unit, and thus it was difficult to fix the box collection unit at a designated position within the scrap storage device. Additionally, the scrap box fell from the scrap storage device and was loaded onto the box collection unit, and unless the box collection unit was fixed at a designated position within the scrap storage device, the scrap box could not be loaded onto the designated position of the box collection unit.

When the scrap box was not loaded onto the designated position of the box collection unit, there was a problem in which the scrap box spilled out of the box collection unit while the box collection unit was being moved to the scrap discharge place.

### SUMMARY

### TECHNICAL PROBLEM

The present disclosure is designed to solve the above-described problems, and therefore the present disclosure is directed to providing a box collection system capable of loading a scrap box onto a designated position of a box collection unit.

### TECHNICAL SOLUTION

A box collection system according to one embodiment of the present disclosure may include a rack in which a scrap box is installed; and a box collection unit that is carried into/out from the rack and collects the scrap box, wherein the rack may include a coupling member that clamps the box collection unit when the box collection unit is carried in and unclamps the box collection unit when the box collection unit is carried out.

The box collection unit may include a frame forming a stage on which the scrap box is loaded; and a hollow ring installed on a side of the frame.

The box collection unit may further include a handle connected to the frame.

The coupling member may include a clamping unit that clamps/unclamps the box collection unit.

The clamping unit may include a rod portion extending long in the horizontal direction; a U-shaped handle portion connected to the rod portion; a servo motor installed at one end of the handle portion; and a rotating member that rotates along the servo motor and clamps/unclamps the box collection unit.

The coupling member may further include a guide portion that guides the horizontal movement of the clamping unit.

The guide portion may include an open member that is installed horizontally in the rack with one side open; and a box-shaped member that is connected to the open member and has a moving space in which the rod portion moves horizontally formed therein.

The moving space may be an empty space that extends long in the horizontal direction to correspond to the shape of the rod portion.

A sensor that senses a reference plane formed in the frame of the box collection unit may be installed in the rack.

The box collection system may further include a control unit that controls the rotation of the servo motor according to the sensing result of the sensor when the box collection unit is carried in/out.

A wall mount on which the scrap box is mounted may be installed in the rack.

The wall mount may be a foldable wall mount that is folded and unfolded by operation.

The box collection unit may be an autonomous mobile robot that travels in an autonomous driving manner.

### ADVANTAGEOUS EFFECTS

A box collection system according to one embodiment of the present disclosure may include a coupling member that clamps a box collection unit to a rack when the box collection unit is carried in and unclamps the box collection unit from the rack when the box collection unit is carried out. In this case, the box collection unit is carried in only to a designated position inside the rack, and thus the scrap box may always be loaded only to a designated position of the box collection unit.

### BRIEF DESCRIPTION OF THE DRAWINGS

FIG. 1 is a perspective view showing a state in which scrap boxes are mounted on a rack of a box collection system according to the present disclosure.
FIG. 2 is a perspective view showing a state in which a box collection unit is being carried into the rack of FIG. 1.
FIG. 3 is a perspective view showing a state in which a box collection unit is completely carried into the rack of FIG. 1.
FIG. 4 is a perspective view showing a state in which a box collection unit is carried out from the rack of FIG. 1.
FIG. 5 is a view showing a detailed structure of coupling members installed in the rack of FIG. 1.
FIG. 6 is a view showing a state in which sensors installed in the rack of FIG. 1 sense reference planes of the box collection unit.

### DETAILED DESCRIPTION

Hereinafter, preferred embodiments of the present disclosure will be described in sufficient detail with reference to the accompanying drawings to enable those having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the present disclosure.

Additionally, it should be understood that the terms or words used in the present disclosure and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

Hereinafter, a box collection system according to the present disclosure will be described with reference to the drawings.

### First embodiment

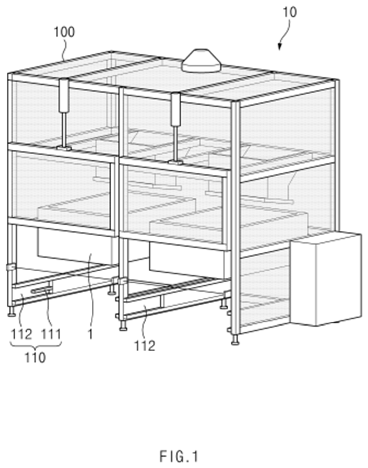

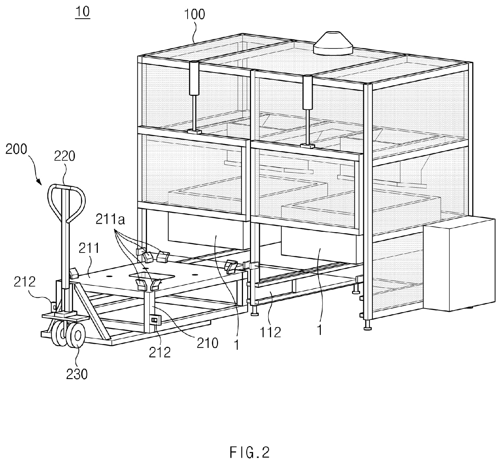

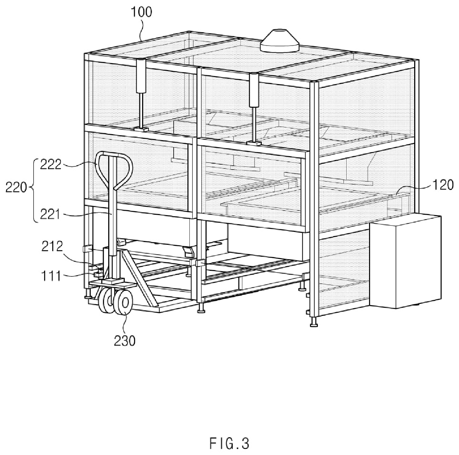

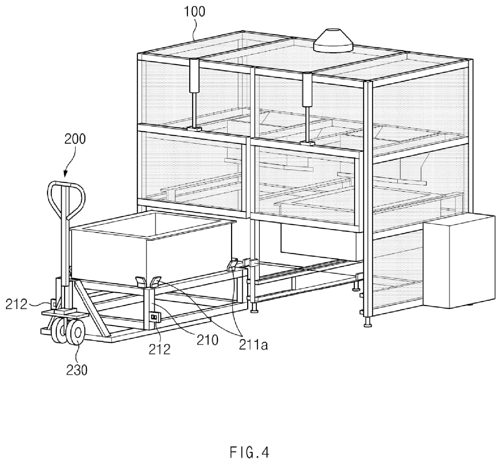

FIG. 1 is a perspective view showing a state in which scrap boxes are mounted on a rack of a box collection system according to the present disclosure, and FIG. 2 is a perspective view showing a state in which a box collection unit is being carried into the rack of FIG. 1. FIG. 3 is a perspective view showing a state in which a box collection unit is completely carried into the rack of FIG. 1, and FIG. 4 is a perspective view showing a state in which a box collection unit is carried out from the rack of FIG. 1.

Referring to FIGS. 1 to 4, the box collection system 10 according to the first embodiment of the present disclosure may include a rack 100 in which a scrap box 1 is installed, and a box collection unit 200 that is carried in and carried out from the rack 100 and collects the scrap box 1. Here, a coupling member 110 that clamps the box collection unit 200 when the box collection unit 200 is carried in the rack 100 and unclamps the box collection unit 200 when the box collection unit 200 is carried out may be installed in the rack 100.

The box collection unit 200 is clamped to the coupling member 110 installed in the rack 100 while being carried into the rack 100, and thus the box collection unit 200 may be fixed to a designated position within the rack 100. That is, the box collection unit 200 is fixed only to a designated position within the rack 100, and thus the scrap box 1 may fall only to a predetermined position of the box collection unit 200. In this case, there is an advantageous effect that the scrap box 1 may be loaded only at a designated position of the box collection unit 200, thereby preventing the scrap box 1 from spilling out during movement of the box collection unit 200.

Additionally, when the box collection unit 200 is carried out from the rack 100, the clamping between the box collection unit 200 and the coupling member 110 may be released. As a result, the box collection unit 200 may be unclamped from the rack 100 and freely carried out from the rack 100. That is, the coupling member 110 may be a member that clamps the box collection unit 200 only while the box collection unit 200 is positioned inside the rack 100.

The scrap box 1 is a box in which scraps such as cuttings or dust of raw materials generated in the process of manufacturing and processing a product are loaded, and may have various shapes. For example, the scrap box 1 is a cuboidal box with an open top, and scraps may be loaded into the scrap box 1 through the open top.

The scrap box 1 may be installed in the rack 100 in various ways. For example, the scrap box 1 may be installed on a wall mount 120 formed on the frame of the rack 100. Specifically, wing portions protruding outward are formed on both sides of the upper end of the scrap box 1, and these wing portions may be mounted on the wall mount 120.

The wall mount 120 is what the wing portions of the scrap box 1 are mounted on, and the wall mount 120 may have a folding structure that is folded and unfolded by operation. When the wall mount 120 is fully unfolded in the horizontal direction, the scrap box 1 may be mounted on the wall mount 120 and stored inside the rack 100. Additionally, the wall mount 120 may be folded downward by 90 degrees. When the wall mount 120 is folded, the wing portion may no longer be supported, and thus the scrap box 1 may fall downward.

The operation of the wall mount 120 may be performed by a control unit to be described later. Specifically, the wall mount 120 may be connected to a servo motor that rotates by a predetermined angle by operation of the control unit. The operator may rotate the servo motor by operating the control unit, and the wall mount 120 connected thereto may be folded and unfolded according to the rotation of the servo motor.

The rack 100 is a storage unit that temporarily stores the scrap box 1 and may be formed in various ways. For example, as illustrated in FIGS. 1 to 4, the rack 100 may have a structure in which a plurality of frames are connected. An open passage through which the box collection unit 200 is carried in/out is formed in this rack 100, and the scrap box 1 may be positioned on the upper side of the passage. Specifically, the scrap box 1 may be mounted on the wall mount 120 installed on the upper side of the passage through which the box collection unit 200 is carried in/out.

Additionally, the top of the rack 100 is open, and the scrap may be loaded into the scrap box 1 by passing through the top of the open rack 100. The scrap may pass through the top of the rack 100 in various ways. For example, a conveyor belt may be installed on the open top of the rack 100, and the scrap may be moved to the open top of the rack 100 through the conveyor belt. An end of the conveyor belt is positioned above the open top of the rack 100, and thus the scrap may fall from the end of the conveyor belt to the inside of the rack 100. The scrap may fall in this manner and be loaded into the scrap box 1 inside the rack 100.

The box collection unit 200 is a unit that is carried into/out from the rack 100 storing the scrap box 1, and may be configured in various ways. For example, the box collection unit 200 is a cart provided with wheels 230 and a handle 220, and the operator may move it by pushing or pulling the handle 220. The box collection unit 200 may be carried in/out through a passage formed in the rack 100, and the box collection unit 200 may be clamped to a coupling member 110 when carried into the rack 100.

Additionally, when the box collection unit 200 is completely carried into the rack 100 and placed in a state of being clamped to the coupling member 110, the scrap box 1 may fall toward the box collection unit 200 and loaded at a predetermined position on the box collection unit 200. Thereafter, the clamping between the box collection unit 200 and the coupling member 110 is released, and the box collection unit 200 may be carried out from the rack 100 with the scrap box 1 loaded thereon. Thereafter, the box collection unit 200 may be moved to a scrap discharge space that discharges scraps in the scrap box 1.

The coupling member 110 is installed in the rack 100 and fastened/unfastened to the box collection unit 200 when the box collection unit 200 is carried into/out from the inside of the rack 100, and may be configured in various ways. Specifically, the coupling member 110 may be coupled to the box collection unit 200 when the box collection unit 200 is carried into the rack 100, and may be uncoupled from the box collection unit 200 before the box collection unit 200 is carried out from the rack 100.

That is, the coupling member 110 is a member that temporarily fixes the box collection unit 200 to the rack 100, and may be coupled to the box collection unit 200 while the box collection unit 200 is carried into the rack 100 and the scrap box 1 is seated at a predetermined position of the box collection unit 200. In this case, the box collection unit 200 is fixed to only a designated position within the rack 100, and thus the scrap box 1 may fall only to a predetermined position of the box collection unit 200. Therefore, the scrap box 1 may be loaded only at a designated position of the box collection unit 200, thereby preventing the scrap box 1 from spilling out during movement of the box collection unit 200.

Additionally, the coupling member 110 is uncoupled from the box collection unit 200 before the box collection unit 200 is carried out from the rack 100, and thus the box collection unit 200 may be carried out from the rack 100 without any resistance. For reference, the coupling/uncoupling of the coupling member 110 and the box collection unit 200 may be controlled by a control unit to be described later.

Meanwhile, the box collection unit 200 may include a frame 210 forming a stage 211 on which the scrap box 1 is loaded. Specifically, the box collection unit 200 includes a body composed of a plurality of frames 210, and a flat stage 211 may be formed above the body. The scrap box 1 falls from the rack 100 and is seated on the stage 211, and a plurality of protrusions 211a protruding upward may be formed at the corners of the stage 211.

Specifically, the stage 211 is a flat rectangular plane, and the area of the stage 211 may be substantially the same as the area of the lower surface of the scrap box 1, or may be formed to be wider than the area of the lower surface of the scrap box 1 by a predetermined size. A pair of protrusions 211a may be formed at each of the four corners of the stage 211. That is, the scrap box 1 may fall into the space between the plurality of protrusions 211a formed on the stage 211.

Since the space between the plurality of protrusions 211a is formed to be substantially the same as the area of the lower surface of the scrap box 1 or wider than the area of the lower surface of the scrap box 1 by a predetermined size, the scrap box 1 falling onto the stage 211 may be seated in the space between the plurality of protrusions 211a. The plurality of protrusions 211a protrude upward from the stage 211, which may prevent the scrap box 1 from spilling out during movement of the box collection unit 200.

Meanwhile, the box collection unit 200 may include a hollow ring 212 installed on the side of the frame 210. Specifically, the hollow rings 212 may be installed one on each of the left and right sides of the frame 210. In particular, the height at which the ring 212 is installed on the frame 210 may be substantially the same as the height of the coupling member 110 installed on the rack 100.

The ring 212 has substantially the same height as the coupling member 110, and thus when the box collection unit 200 is carried in the rack 100, the ring 212 may be coupled to the coupling member 110. Additionally, before the box collection unit 200 is carried out from the rack 100, the ring 212 and the coupling member 110 may be uncoupled.

The box collection unit 200 may include a handle 220 connected to the frame 210. The handle 220 may have various structures. For example, the handle 220 may include a handle pole 221 connected to the frame 210 and a handle portion 222 connected to the handle pole 221. A pair of wheels 230 installed at the lower end of one side of the frame 210 may be positioned on the lower side of the handle pole 221.

The operator may move the box collection unit 200 by pushing or pulling the box collection unit 200 while grasping the handle portion 222 of the handle 220. In particular, the operator may push the box collection unit 200 to carry the box collection unit 200 into the rack 100, and may pull the box collection unit 200 to carry the box collection unit 200 out from the rack 100. At this time, a pair of wheels 230 are positioned at the lower part of the handle pole 221, so that they are positioned close to the force point where the operator pushes and pulls the handle portion 222. In this case, the force where the operator pushes and pulls the handle portion 222 is transmitted to the pair of wheels 230 more quickly, and thus the operator may easily move the box collection unit 200.

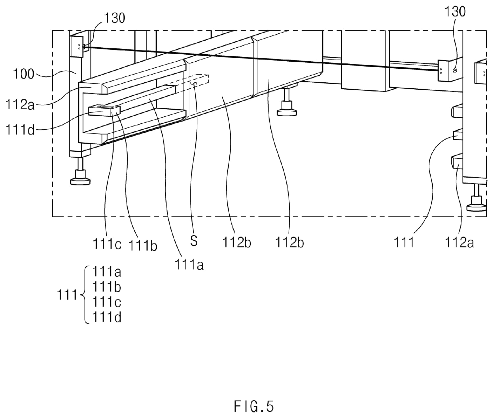

FIG. 5 is a view showing a detailed structure of coupling members installed in the rack of FIG. 1. Referring to FIG. 5, the coupling member 110 may include a clamping unit 111 that clamps/unclamps the box collection unit 200 and a guide portion 112 that guides the horizontal movement of the clamping unit 111.

The clamping unit 111 is installed at substantially the same height as the ring 212 of the box collection unit 200 and is clamped and/or unclamped to the ring 212, and may be configured in various ways. For example, the clamping unit 111 may include a rod portion 111a extending long in the horizontal direction, a U-shaped handle portion 111b connected to the rod portion 111a, a servo motor 111c installed at one end of the handle portion 111b, and a rotating member 111d that rotates along the servo motor 111c and clamps/unclamps the box collection unit 200.

At this time, the rod portion 111a and the handle portion 111b are integrally formed, and the servo motor 111c may be inserted into one end of the U-shaped handle portion 111b. Specifically, the servo motor 111c may be inserted into a space provided inside one end of the handle portion 111b and may rotate by a predetermined angle according to the control of a control unit to be described later.

The rotating member 111d is a member that rotates together according to the rotation of the servo motor 111c, and may be coupled to the servo motor 111c in various ways. For example, a portion of the rotating member 111d may be welded to the rotation shaft of the servo motor 111c, or may be coupled to a brush connected to the rotation shaft of the servo motor 111c.

Meanwhile, the guide portion 112 may include an open member 112a that is installed horizontally in the rack 100 with one side open and a box-shaped member 112b that is connected to the open member 112a and has a moving space S in which the rod portion 111a moves horizontally formed therein.

The open member 112a is a member in the shape of the letter ' 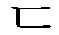 ' with one side open and may be installed horizontally in the rack 100. The open surface of the open member 112a faces a space in which the box collection unit 200 is carried in/out, and when the box collection unit 200 is carried in/out, the ring 212 formed on the box collection unit 200 may pass through the open surface of the open member 112a.

The box-shaped member 112b is a cuboid box-shaped member connected to an end of the open member 112a, and a moving space S in which the rod portion 111a moves horizontally may be formed inside the box-shaped member 112b. At this time, the moving space S may be an empty space that extends long in the horizontal direction to correspond to the shape of the rod portion 111a.

When the box collection unit 200 is carried in the rack 100, the rotating member 111d is clamped to the ring 212 of the box collection unit 200, and as the box collection unit 200 is carried in, the rod portion 111a may be inserted to the end of the moving space S. In this case, the rod portion 111a may no longer be inserted into the moving space S, and thus the box collection unit 200 stops being carried in and stops. The corresponding position at which the box collection unit 200 stops is a designated position within the rack 100, and the scrap box 1 may be positioned above the box collection unit 200 stopping at the corresponding position. Thereafter, the scrap box 1 may fall and be seated on the stage 211 of the box collection unit 200.

After the scrap box 1 is seated on the stage 211 as described above, the box collection unit 200 may be carried out from the rack 100. In this case, the rod portion 111a may be moved toward the outside of the moving space S. Before the rod portion 111a is completely carried out from the moving space S, the clamping between the rotating member 111d and the ring 212 is released, and the box collection unit 200 may be carried out from the rack 100 without restraint.

That is, as the coupling member 110 includes the clamping unit 111 and the guide portion 112 having the above structure, the operator may load the scrap box 1 at a preset position on the box collection unit 200, and may easily carry the box collection unit 200 into/out from the inside of the rack 100.

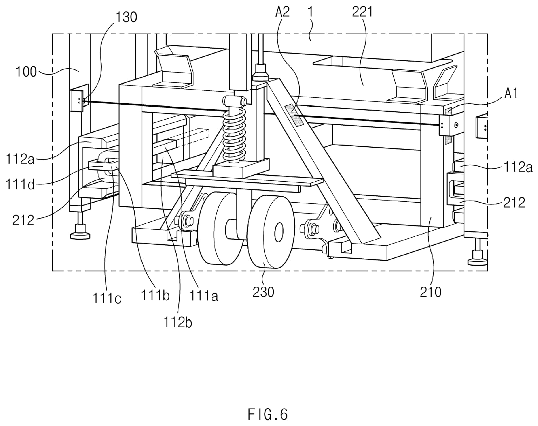

Meanwhile, FIG. 6 is a view showing a state in which sensors installed in the rack of FIG. 1 sense reference planes of the box collection unit. Referring to FIG. 6, sensors 130 that sense reference planes A1, A2 formed on the frame 210 of the box collection unit 200 may be installed in the rack 100.

Specifically, two reference planes A1, A2 may be formed at different positions on the frame 210 of the box collection unit 200, and the sensors 130 may sense such reference planes A1, A2. These sensors 130 may recognize the reference planes A1, A2 and may be configured in various ways. For example, the sensors 130 may each be installed on both sides of the rack 100 to face the space where the box collection unit 200 is carried in/out.

The pair of sensors 130 may recognize that the reference planes A1, A2 formed on the frame 210 pass between the sensors 130. The sensors 130 are laser or ultrasonic sensors and may measure the distance between each of the reference planes A1, A2 and the sensors 130 to recognize that each of the reference planes A1, A2 passes between the pair of sensors 130.

Meanwhile, a box collection system 10 according to the first embodiment of the present disclosure may further include a control unit that controls the rotation of the servo motor 111c according to the sensing result of the sensor 130. The control unit is electrically connected to the servo motor 111c, and may control the rotation of the servo motor 111c to control the clamping/unclamping of the rotating member 111 d and the ring 212.

Specifically, when the box collection unit 200 is carried into the rack 100, the first reference plane A1 formed on the frame 210 of the box collection unit 200 passes between the pair of sensors 130. When the sensors 130 recognize this, the control unit rotates the servo motor 111c in one direction to open the rotating member 111d. Thereafter, the ring 212 of the box collection unit 200 may be inserted into the inner area of the handle portion 111b.

As described above, at the moment when the ring 212 is inserted into the inner area of the handle portion 111b, the second reference plane A2 of the box collection unit 200 passes between the pair of sensors 130. When the sensors 130 recognize this, the control unit rotates the servo motor 111c in the other direction to close the rotating member 111d. In this case, the ring 212 inserted into the inner area of the handle portion 111b has its exit blocked by the rotating member 111 d, and thus the box collection unit 200 is clamped and coupled to the rack 100.

The box collection unit 200 may move to a designated position within the rack 100 while being clamped and coupled to the rack 100. Thereafter, when the scrap box 1 is seated on the stage 211 of the box collection unit 200, the box collection unit 200 may be carried out from the rack 100. At this time, at the moment when the second reference plane A2 of the box collection unit 200 passes between the pair of sensors 130, the control unit rotates the servo motor 111c in one direction to open the rotating member 111d. Thereafter, as the box collection unit 200 is carried out, the ring 212 of the box collection unit 200 comes out of the inner area of the handle portion 111b.

As described above, at the moment when the ring 212 completely comes out of the inner area of the handle portion 111b, the first reference plane A1 of the box collection unit 200 passes between the pair of sensors 130. When the sensors 130 recognize this, the control unit may rotate the servo motor 111c in the other direction to close the rotating member 111d.

As the box collection system 10 according to the first embodiment of the present disclosure includes the above-described control unit, it is possible to automatically control the clamping/unclamping of the box collection unit 200 and the rack 100 when the box collection unit 200 is carried in/out.

### Second embodiment

The box collection system according to the second embodiment of the present disclosure differs from the first embodiment in that the box collection unit collecting the scrap box is an autonomous mobile robot. Contents in common with the first embodiment will be omitted as much as possible, and the second embodiment will be described focusing on differences. That is, it is obvious that contents not described in the second embodiment may be considered as contents of the first embodiment if necessary.

In the box collection system 10 according to the second embodiment of the present disclosure, the box collection unit 200 may be an autonomous mobile robot that moves in an autonomous driving manner. In this case, the box collection unit 200 may move between the unit installation space within the rack and the discharge space where the scrap is discharged in an autonomous driving manner. That is, the scrap box is automatically moved to the scrap discharge space without the intervention of the operator, and thus there is an advantageous effect of hygienically performing the scrap discharge process.

The box collection unit 200 is a robot that autonomously travels back and forth between the unit installation space and the scrap discharge space described above, and may be configured in various ways. For example, unlike those illustrated in FIGS. 1 to 6, the box collection unit 200 may be an autonomous mobile robot (AMR) or an automated guided vehicle (AGV) that autonomously travels back and forth between the unit installation space and the scrap discharge space.

When the box collection unit 200 is an AMR or AGV that autonomously travels without the intervention of the operator, the box collection unit 200 does not need to be equipped with a handle 220. Therefore, an accident in which the handle 220 collides with surrounding obstacles while the box collection unit 200 is travelling may be prevented in advance, and there is an advantageous effect of enabling a compact design by reducing the overall volume of the box collection unit 200.

The present disclosure has been hereinabove described with regard to a limited number of embodiments and drawings, but the present disclosure is not limited thereto and may be embodied in different forms by those having ordinary skill in the art within the technical aspect of the present disclosure and the scope of the appended claims and their equivalents.

### [List of Reference Numerals]

| | | | |
|---|---|---|---|
| 1: | Scrap box | 10: | Box collection system |
| 100: | Rack | 110: | Coupling member |
| 111: | Clamping unit | 112: | Guide portion |
| 120: | Wall mount | 130: | Sensor |
| 200: | Box collection unit | 210: | Frame |
| 211: | Stage | 212: | Ring |
| 220: | Handle | 230: | Wheel |
| S: | Moving space | | |

## Claims

1. A box collection system comprising:
a rack in which a scrap box is installed; and
a box collection unit that is carried into/out from the rack and collects the scrap box,
wherein the rack comprises a coupling member that clamps the box collection unit when the box collection unit is carried in and unclamps the box collection unit when the box collection unit is carried out.

2. The box collection system according to claim 1,
wherein the box collection unit comprises:
a frame forming a stage on which the scrap box is loaded; and
a hollow ring installed on a side of the frame.

3. The box collection system according to claim 2,
wherein the box collection unit further comprises a handle connected to the frame.

4. The box collection system according to claim 2,
wherein the coupling member comprises a clamping unit that clamps/unclamps the box collection unit.

5. The box collection system according to claim 4,
wherein the clamping unit comprises:
a rod portion extending long in the horizontal direction;
a U-shaped handle portion connected to the rod portion;
a servo motor installed at one end of the handle portion; and
a rotating member that rotates along the servo motor and clamps/unclamps the box collection unit.

6. The box collection system according to claim 5,
wherein the coupling member further comprises a guide portion that guides the horizontal movement of the clamping unit.

7. The box collection system according to claim 6,
wherein the guide portion comprises:
an open member that is installed horizontally in the rack with one side open; and
a box-shaped member that is connected to the open member and has a moving space in which the rod portion moves horizontally formed therein.

8. The box collection system according to claim 7,
wherein the moving space is an empty space that extends long in the horizontal direction to correspond to the shape of the rod portion.

9. The box collection system according to claim 5,
wherein a sensor that senses a reference plane formed in the frame of the box collection unit is installed in the rack.

10. The box collection system according to claim 9, further comprising:
a control unit that controls the rotation of the servo motor according to the sensing result of the sensor when the box collection unit is carried in/out.

11. The box collection system according to claim 1,
wherein a wall mount on which the scrap box is mounted is installed in the rack.

12. The box collection system according to claim 11,
wherein the wall mount is a foldable wall mount that is folded and unfolded by operation.

13. The box collection system according to claim 1,
wherein the box collection unit is an autonomous mobile robot that travels in an autonomous driving manner.
